# EUROPÄISCHE PATENTSCHRIFT

(11) **EP 3 727 700 B1**
(45) Veröffentlichungstag und Bekanntmachung des Hinweises auf die Patenterteilung: **03.04.2024**
(21) Anmeldenummer: 18826285.1
(22) Anmeldetag: 17.12.2018
(51) Int. Cl.: B04B 5/04, B04B 7/08, B04B 7/02, F16B 21/18

(54) **ZENTRIFUGENROTOR**
CENTRIFUGE ROTOR
ROTOR DE CENTRIFUGEUSE

(30) Priorität: 20.12.2017 DE 102017130786
(43) Veröffentlichungstag der Anmeldung: 28.10.2020
(73) Patentinhaber: Eppendorf SE, 22339 Hamburg (DE)
(72) Erfinder: KNOSPE, Christoph, 22339 Hamburg (DE); KÜHNERT, Steffen, 22339 Hamburg (DE)
(74) Vertreter: Hecht, Jan-David
(86) Internationale Anmeldenummer: PCT/EP2018/085334
(87) Internationale Veröffentlichungsnummer: WO 2019/121581

(56) Entgegenhaltungen:
- DE-A1- 4 326 231
- DE-A1-102005 014 218
- US-A1- 2004 245 686

## Beschreibung

Die vorliegende Erfindung betrifft einen Zentrifugenrotor nach dem Oberbegriff von Anspruch 1.

Zentrifugenrotoren werden in Zentrifugen, insbesondere Laborzentrifugen, dazu eingesetzt, um die Bestandteile von darin zentrifugierten Proben unter Ausnutzung der Massenträgheit zu trennen. Dabei werden zur Erzielung hoher Entmischungsraten immer höhere Rotationsgeschwindigkeiten eingesetzt. Laborzentrifugen sind dabei Zentrifugen, deren Rotoren bei vorzugsweise mindestens 3.000, bevorzugt mindestens 10.000, insbesondere mindestens 15.000 Umdrehungen pro Minute arbeiten und zumeist auf Tischen platziert werden. Um sie auf einem Arbeitstisch platzieren zu können, weisen sie insbesondere einen Formfaktor von weniger als 1 m x 1 m x 1 m auf, ihr Bauraum ist also beschränkt. Vorzugsweise ist dabei die Gerätetiefe auf max. 70 cm beschränkt.

Zumeist ist vorgesehen, dass die Proben bei bestimmten Temperaturen zentrifugiert werden. Beispielsweise dürfen Proben, die Eiweiße und dgl. organische Substanzen enthalten, nicht überhitzt werden, so dass die Obergrenze für die Temperierung solcher Proben standardmäßig im Bereich von +40°C liegt. Andererseits werden bestimmte Proben standardmäßig im Bereich +4°C (die Anomalie des Wassers beginnt bei 3,98°C) gekühlt.

Neben solchen vorbestimmten Höchsttemperaturen von beispielsweise ca. +40°C und Standarduntersuchungstemperaturen wie beispielsweise +4°C sind auch weitere Standarduntersuchungstemperaturen vorgesehen, wie beispielsweise bei +11°C, um bei dieser Temperatur zu prüfen, ob die Kälteanlage der Zentrifuge unterhalb Raumtemperatur geregelt läuft. Andererseits ist es aus Arbeitsschutzgründen notwendig, ein Anfassen von Elementen zu verhindern, die eine Temperatur von größer gleich +60°C aufweisen.

Zur Temperierung können grundsätzlich aktive und passive Systeme verwendet werden. Aktive Kühlungssysteme besitzen einen Kältemittelkreislauf, der den Zentrifugenkessel temperiert, wodurch indirekt der Zentrifugenrotor und die darin aufgenommenen Probenbehälter gekühlt werden.

Passive Systeme basieren auf einer abluftunterstützten Kühlung bzw. Belüftung. Diese Luft wird direkt an dem Zentrifugenrotor vorbei geführt, wodurch eine Temperierung erfolgt. Die Luft wird dabei durch Öffnungen in den Zentrifugenkessel gesaugt, wobei das Ansaugen selbständig durch die Drehung des Zentrifugenrotors erfolgt.

Die zu zentrifugierenden Proben werden in Probenbehältern gelagert und diese Probenbehälter mittels des Zentrifugenrotors rotatorisch angetrieben. Dabei werden die Zentrifugenrotoren üblicherweise mittels einer senkrechten Antriebswelle, die von einem elektrischen Motor angetrieben wird, in Rotation versetzt. Es gibt verschiedene Zentrifugenrotoren, die je nach Anwendungszweck eingesetzt werden. Dabei können die Probenbehälter die Proben direkt enthalten oder in den Probenbehältern sind eigene Probenbehältnisse eingesetzt, die die Probe enthalten, so dass in einem Probenbehälter eine Vielzahl von Proben gleichzeitig zentrifugiert werden können.

Ganz allgemein weisen solche Zentrifugenrotoren üblicherweise ein Unterteil und einen Deckel auf, wobei im geschlossenen Zustand des Deckels sich zwischen Unterteil und Deckel ein Innenraum ausbildet, in dem die Probengefäße angeordnet werden können, um die Proben in einer geeigneten Zentrifuge zu zentrifugieren. Wenn die Probengefäße unter einem fest vorgegebenen Winkel in dem Zentrifugenrotor angeordnet sind, dann handelt es sich um einen sogenannten Festwinkelrotor.

Zur Verbindung mit der Zentrifuge ist das Unterteil üblicherweise mit einer Nabe versehen, die mit der Motor getriebenen Antriebswelle der Zentrifuge koppelbar ist.

Der Deckel wiederum ist mit dem Unterteil normalerweise verschließbar ausgebildet.

Üblicherweise erfolgt eine aerosoldichte Abdichtung zwischen dem Deckel und dem Unterteil, wobei beispielsweise der Festwinkelrotor FA-45-48-11 der Firma Eppendorf^{®}, der beispielsweise in der Laborzentrifuge 5430 R der Firma Eppendorf^{®} einsetzbar ist, einen diskusartigen Deckel aufweist, in dem eine radial nach außen offene Nut angeordnet ist, wobei die Nut einen O-Ring als Dichtungsmittel beinhaltet. Der Deckel wird beim Schließen in eine korrespondierende etwa senkrecht verlaufende Ausnehmung des Unterteils eingesetzt und nach unten verspannt, wobei der O-Ring zwischen Nut und Seitenwand des Unterteils eingeklemmt wird, um dadurch die Abdichtung zu bewirken. Durch die aerosoldichte Abdichtung können die Zentrifugenbehälter einfach transportiert und manipuliert werden, ohne dass Gefahr besteht, dass die Proben die Zentrifuge oder die Umgebung kontaminieren können.

Der Verschluss zwischen Deckel und Unterteil kann verschieden ausgebildet sein.

Bekannt sind zum einen Zentrifugenrotoren, bei denen an dem Deckel eine Verriegelungsmutter freidrehbar angeordnet ist und das Unterteil rings um die Nabe ein entsprechendes Gewinde aufweist. Ein Beispiel für einen solchen Zentrifugenrotor ist das Modell F-45-32-5-PCR der Fa. Eppendorf^{®}. Zum Verschließen des Deckels auf dem Unterteil muss der Deckel mit der Verriegelungsmutter auf das Gewinde aufgesetzt und verschraubt werden. Hierzu sind zwei Hände erforderlich, nämlich eine Hand, die das Unterteil festhält, und eine Hand, die die Verriegelungsmutter aufsetzt und festzieht. Außerdem müssen zahlreiche Umdrehungen der Verriegelungsmutter vollzogen werden, bis der Verschluss fest ist, was mit einem erhöhten Aufwand verbunden ist.

Um diesen Aufwand zu verringern, sind schon Zentrifugenrotoren bekannt, bei denen eine Art Bajonettverschluss verwendet wird, so dass nur noch etwa eine halbe Umdrehung einer entsprechenden Verriegelungsmutter vollzogen werden muss, bis der Verschluss fest ist. Ein Beispiel für einen solchen Zentrifugenrotor ist das Modell FA-45-18-11 der Fa. Eppendorf^{®}. Der Verschluss ist dabei in der Form eines Bewegungsgewindes realisiert, dessen Steigungswinkel so gewählt ist, dass die Verriegelungsmutter mit ihren Verriegelungsnocken aufgrund des Eigengewichts des Deckels selbsttätig bis kurz vor die Verschlussposition rotiert. Außerdem ist mit

Hilfe einer gummielastischen Abdichtung eine formschlüssige Arretierung verwirklicht, so wie es in der EP 2 024 097 A1 beschrieben ist, die einen Zentrifugenrotor gemäß dem Oberbegriff des Anspruchs 1 offenbart. Dadurch muss der Deckel mit einer Hand nur noch aufgesetzt werden, wonach die Verriegelungsmutter sich selbsttätig bis vor die Verriegelungsposition dreht. Dann muss die Verriegelungsmutter nur noch um einige Grad weitergedreht werden, um die Arretierung vorzunehmen, wobei die gummielastische Abdichtung zusammen mit einem Rücksprung in der Bajonettverschluss-Kulisse gegenüber dem Verriegelungsnocken die Arretierung bewirkt. Allerdings sind für diesen letzten Schritt auch zwei Hände erforderlich. Andere Beispiele von Zentrifugenrotoren sind in DE 4326231 A1 und DE 102005014218 A1 offenbart.

Es ist daher Aufgabe der vorliegenden Erfindung, den Zentrifugenrotor in Bezug auf den Verschluss zwischen dem Unterteil des Zentrifugenrotors und dem Deckel so zu verbessern, dass eine echte Einhandbedienbarkeit ermöglicht wird. Insbesondere soll der Verschluss mit nur einer Hand verschließbar und wieder lösbar sein. Vorzugsweise soll der Verschluss konstruktiv einfacher und auch kostengünstiger herstellbar sein.

Diese Aufgabe wird gelöst mit dem erfindungsgemäßen Zentrifugenrotor nach Anspruch 1. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn der Verschluss durch eine Vertiefung und ein korrespondierendes Federelement ausgebildet ist. Das Federelement kann dabei selbst eine Federwirkung bereitstellen oder es kann auch ein Element sein, das federnd gelagert ist. Durch die Federwirkung kann der Verschluss leicht verschlossen und wieder geöffnet werden.

Der erfindungsgemäße Zentrifugenrotor weist also ein Unterteil und einen Deckel auf, wobei der Zentrifugenrotor eine Drehachse aufweist, wobei der Deckel auf das Unterteil entlang der Drehachse in einer Schließrichtung aufsteckbar und entlang der Drehachse in einer Lösrichtung abnehmbar ist, wobei im geschlossenen Zustand des Deckels ein Verschluss zwischen dem Unterteil und dem Deckel besteht, und zeichnet sich dadurch aus, dass zumindest eines der Elemente Unterteil und Deckel zumindest eine erste Vertiefung aufweist, in die im geschlossenen Zustand des Deckels zumindest ein Federelement eingreift, das an dem anderen der Elemente Deckel und Unterteil angeordnet ist.

In einer vorteilhaften Weiterbildung ist vorgesehen, dass die erste Vertiefung und das Federelement angepasst sind, eine Clipsverbindung bereitzustellen. Eine solche Clipsverbindung ist eine formschlüssige Rastverbindung, bei der zumindest ein Rastelement elastisch ausgebildet ist. Dadurch lässt sich der Verschluss besonders einfach und ohne weitere das Federelement betätigenden Teile betätigen.

In einer vorteilhaften Weiterbildung ist vorgesehen, dass die erste Vertiefung sich senkrecht zur Drehachse öffnend ausgebildet ist. Dadurch ist der Verschluss im Rahmen der Zentrifugation keinen lösenden axialen Kräften ausgesetzt, wodurch es keine Momente zum Lösen des Verschlusses gibt und er dadurch besonders sicher ist. Durch eine besondere Formgebung und/oder Lage der ersten Nut kann zusätzlich erreicht werden, dass der Deckel einer sich ausbildenden verschließenden axialen Kraft ausgesetzt wird, durch die er auf das Unterteil gedrückt wird. Beispielsweise könnte die Nut asymmetrisch ausgebildet sein, mit einer gegenüber der Drehachse mehr senkrechten Ausbildung der Seitenwand in Lösrichtung und einer gegenüber der Drehachse mehr geneigten Ausbildung der Seitenwand in Schließrichtung. Andererseits kann die Nut auch gegenüber dem Federelement leicht in Lösrichtung versetzt angeordnet sein, so dass das Federelement die Nut in Schließrichtung vorspannt.

In einer vorteilhaften Weiterbildung ist vorgesehen, dass die erste Vertiefung als erste Ringnut ausgebildet ist. Dann lässt sich der Verschluss für alle azimutalen Ausrichtungen zwischen Deckel und Unterteil betätigen, so dass er sehr komfortabel ist.

In einer vorteilhaften Weiterbildung ist vorgesehen, dass die erste Vertiefung eine Löshilfe aufweist, die bevorzugt als erste Fase oder Rundung ausgebildet ist, durch die das Federelement beim Abnehmen des Deckels vom Unterteil außer Eingriff mit der ersten Vertiefung gebracht wird. Dadurch kann der Verschluss beim Lösen sehr einfach und damit ohne großen Kraftaufwand betätigt werden.

In einer vorteilhaften Weiterbildung ist vorgesehen, dass in Bezug auf die Schließrichtung zwischen der ersten Vertiefung und dem Unterteil eine Schließhilfe angeordnet ist, die bevorzugt als zweite Fase oder Rundung ausgebildet ist, durch die das Federelement beim Aufstecken des Deckels auf das Unterteil in Eingriff mit der ersten Vertiefung gebracht wird. Dadurch kann der Verschluss beim Verschließen sehr einfach und damit ohne großen Kraftaufwand betätigt werden.

In einer vorteilhaften Weiterbildung ist vorgesehen, dass die erste Vertiefung in Bezug auf die Lösrichtung auf der vom Unterteil abgewandten Seite eine dritte Fase oder Rundung aufweist. Dadurch wird das Federelement beim Zentrifugieren in der ersten Vertiefung zentriert, wodurch der Verschluss beim Zentrifugieren noch besser gegen das Einwirken axialer Kräfte gesichert ist.

In einer vorteilhaften Weiterbildung ist vorgesehen, dass die erste und/oder die zweite und/oder die dritte Fase in Bezug auf die Drehachse einen Winkel im Bereich 30° bis 80°, bevorzugt 45° bis 75°, insbesondere 60° aufweist. Bei diesen Winkeln ist eine besonders gute jeweilige Funktion gewährleistet. Anstelle einer Fase kann allerdings auch eine Rundung verwendet werden, wobei die Rundung als konkave oder konvexe Rundung ausgebildet sein kann.

In einer vorteilhaften Weiterbildung ist vorgesehen, dass das Federelement als Ringelement, bevorzugt als Ringfeder, insbesondere als Diametralfeder ausgebildet ist. Dadurch wird ein allseitig besonders sicherer Verschluss bereitgestellt. Durch die Diametralfeder ist der Verschluss zugleich besonders leichtgängig und sicher. Anstelle einer Diametralfeder als Ringelement könnte beispielsweise auch ein O-Ring Verwendung finden.

Unter einem Ringelement wird im Rahmen der vorliegenden Erfindung ein sich rings um die Drehachse erstreckendes Element verstanden. Alternativ können auch Federelemente vorgesehen sein, die die Drehachse nur abschnittsweise, beispielsweise auch nur punktförmig umgeben. Beispielsweise könnten Spiral oder Diametralfedern nur abschnittsweise vorliegen. Oder es könnten federbeaufschlagte Kugelelemente als Federelemente bestehen. Beispielsweise könnten federnde Druckstücke eingesetzt werden.

Unter einer Diametralfeder wird im Rahmen der vorliegenden Erfindung eine Feder verstanden, deren Windung in Bezug auf die Richtung des Querschnitts der Feder nicht parallel, sondern in eine Richtung definiert geneigt angeordnet sind. Der Neigungswinkel liegt dabei im Bereich von 20° bis 70°, bevorzugt 30° bis 60°, höchst bevorzugt 40° bis 50° und beträgt insbesondere 45°.

In einer vorteilhaften Weiterbildung ist vorgesehen, dass das Federelement in einer zweiten Vertiefung angeordnet ist, die bevorzugt als zweite Ringnut ausgebildet ist, wobei die zweite Ringnut insbesondere in Bezug auf die Drehachse senkrecht verlaufende seitliche Begrenzungen aufweist. Dadurch wird das Federelement besonders sicher gehalten.

In einer vorteilhaften Weiterbildung ist vorgesehen, dass das Federelement einen Querschnitt in Bezug auf dessen Windungen aufweist und sich im geöffneten Zustand des Deckels zumindest ein Viertel, bevorzugt zumindest die Hälfte dieses Querschnitts in der zweiten Vertiefung befindet. Dadurch ist der Verschluss sehr leichtgängig und das Federelement wird sehr sicher gehalten.

In einer vorteilhaften Weiterbildung ist vorgesehen, dass der Deckel und/oder das Unterteil eine Hinterschneidung aufweist, die als Griff zum Tragen des Zentrifugenrotors dient, wobei die Hinterschneidung bevorzugt gegenüber dem Deckel vorspringt. Dadurch lässt sich der Zentrifugenrotor mit geschlossenem Verschluss besonders leicht und angenehm tragen.

In einer vorteilhaften Weiterbildung ist vorgesehen, dass ein Teil des Unterteils im geschlossenen Zustand durch den Deckel hindurchreicht und als Traghilfe für den Zentrifugenrotor dient, wobei dieses Teil bevorzugt gegenüber dem Deckel farblich abgesetzt ist. Dadurch erfolgt das Tragen sehr sicher, weil der Deckel nicht unfreiwillig abgenommen werden kann, wenn das Teil des Unterteils mit ergriffen wird.

In einer vorteilhaften Weiterbildung ist vorgesehen, dass das Teil des Unterteils als zumindest zwei in Bezug auf die Drehachse beabstandet und/oder gegenüberliegend angeordnete Traggriffelemente ausgebildet ist, die sich bevorzugt mit korrespondierenden Elementen des Deckels zu einem durchgehend ausgebildeten Griff ergänzen. Dann ist das Tragen sehr komfortabel möglich.

Für diese Ausgestaltung, dass ein Teil des Unterteils im geschlossenen Zustand durch den Deckel hindurchreicht und als Traghilfe für den Zentrifugenrotor dient, wobei dieser Teil des Unterteils als zumindest zwei in Bezug auf die Drehachse beabstandet und/oder gegenüberliegend angeordnete Traggriffelemente ausgebildet ist, die sich bevorzugt mit korrespondierenden Elementen des Deckels zu einem durchgehend ausgebildeten Griff ergänzen, wird unabhängiger Schutz beansprucht. Diese Ausgestaltung kann also unabhängig davon, ob zumindest eines der Elemente Unterteil und Deckel zumindest eine erste Vertiefung aufweist, in die im geschlossenen Zustand des Deckels zumindest ein Federelement eingreift, das an dem anderen der Elemente Deckel und Unterteil angeordnet ist, für einen Zentrifugenrotor eingesetzt werden, der ein Unterteil und einen Deckel aufweist, wobei der Zentrifugenrotor eine Drehachse aufweist, wobei der Deckel auf das Unterteil entlang der Drehachse in einer Schließrichtung aufsteckbar und entlang der Drehachse in einer Lösrichtung abnehmbar ist, wobei im geschlossenen Zustand des Deckels ein Verschluss zwischen dem Unterteil und dem Deckel besteht.

In einer vorteilhaften Weiterbildung ist vorgesehen, dass der Deckel in Bezug auf den Verschluss ohne bewegliche Teile ausgebildet, bevorzugt einstückig ist. Dadurch ist der Verschluss besonders einfach und kostengünstig herstellbar, weil eine Rotierbarkeit einer Verriegelungsmutter gegenüber dem Deckel nicht besteht. In einer weiteren bevorzugten Ausgestaltung besteht der Körper des Zentrifugenrotors in Bezug auf den Verschluss nur aus einer Ringfeder und einer diese aufnehmende Vertiefung, also aus zwei Teilen, was ebenfalls sehr einfach und kostengünstig herstellbar und wartbar ist. Insgesamt kann der erfindungsgemäße Verschluss somit aus drei Teilen bestehen: der Ringfeder, der Vertiefung die die Ringfeder aufnimmt und der ersten Vertiefung, die mit der Ringfeder schließend zusammenwirkt.

In einer vorteilhaften Weiterbildung ist vorgesehen, dass eine bevorzugt aerosoldichte Abdichtung zwischen Deckel und Unterteil besteht, so dass der Verschluss in Bezug auf die Abdichtung außerhalb eines zwischen Deckel und Unterteil gebildeten Probenraums angeordnet ist. Dadurch ist die Versiegelung des Probenraumes besonders sicher. Diese Abdichtung könnte beispielsweise in Bezug auf die Schließrichtung nach der ersten Vertiefung angeordnet sein, wobei bevorzugt ein Dichtelement verwendet wird, das zwischen Deckel und Unterteil eingeklemmt wird.

Die Merkmale und weitere Vorteile der vorliegenden Erfindung werden im Folgenden anhand der Beschreibung bevorzugter Ausführungsbeispiele im Zusammenhang mit den Figuren deutlich werden. Dabei zeigen rein schematisch:
- Fig. 1: den erfindungsgemäßen Zentrifugenrotor gemäß einer ersten bevorzugten Ausgestaltung in einer perspektivischen Ansicht,
- Fig. 2: den erfindungsgemäßen Zentrifugenrotor nach Fig. 1 in einer Schnittansicht,
- Fig. 3: eine Detailansicht des Bereichs Z des Verschlusses des erfindungsgemäßen Zentrifugenrotors nach Fig. 2 in einer Schnittansicht,
- Fig. 4a, 4b: die im Rahmen des Verschlusses des erfindungsgemäßen Zentrifugenrotors nach Fig. 1 eingesetzte Diametralfeder in einer perspektivischen Ansicht und einer Draufsicht,
- Fig. 5: den erfindungsgemäßen Zentrifugenrotor gemäß einer zweiten bevorzugten Ausgestaltung in einer perspektivischen Ansicht,
- Fig. 6: das Unterteil des erfindungsgemäßen Zentrifugenrotors gemäß Fig. 5 in einer perspektivischen Ansicht und
- Fig. 7: den Deckel des erfindungsgemäßen Zentrifugenrotors gemäß Fig. 5 in einer perspektivischen Ansicht.

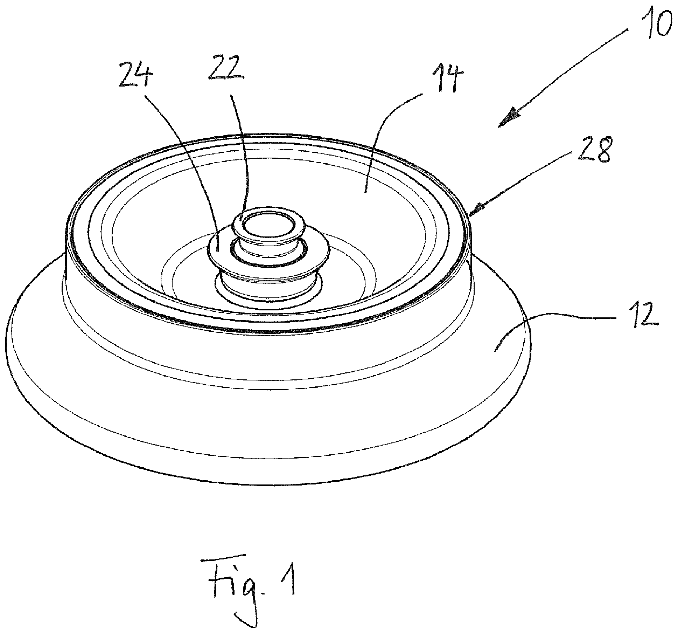

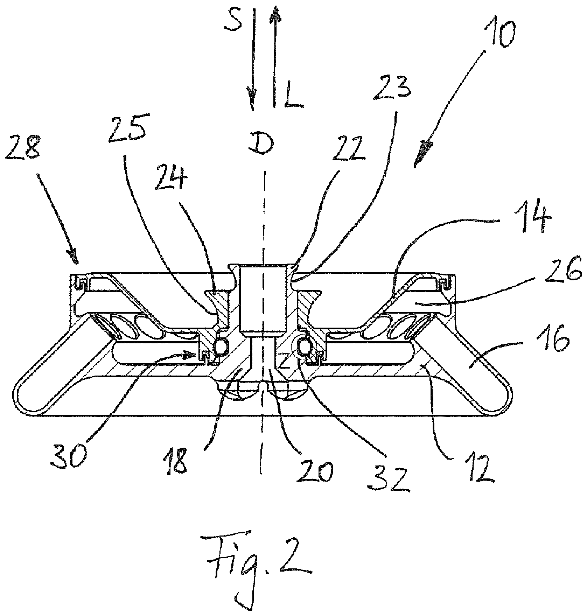

In den Fig. 1 bis 4 ist eine erste bevorzugte Ausgestaltung des erfindungsgemäßen Zentrifugenrotors 10 in verschiedenen Ansichten gezeigt.

Es ist zu erkennen, dass dieser Zentrifugenrotor 10 rotationssymmetrisch ist und ein Unterteil 12 und einen Deckel 14 aufweist, wobei der Deckel 14 auf das Unterteil 12 in einer in Bezug auf die Drehachse D parallelen Schließrichtung S aufgesetzt und in einer in Bezug auf die Drehachse D parallelen Lösrichtung L abgenommen werden kann.

Das Unterteil 12 weist eine Reihe gleichmäßig beabstandeter Bohrungen oder Fächer 16 zur Aufnahme von Probengefäßen in Form von Beispielsweise Reagenzgläsern (nicht gezeigt) auf. Zentral ist in dem Unterteil 12 eine Nabe 18 mit einer Bohrung 20 angeordnet, die eine Antriebswelle einer Laborzentrifuge (beides nicht gezeigt) aufnehmen kann, wodurch der Zentrifugenrotor 10 antreibbar ist. An der Nabe 18 ist aus dem Deckel 14 herausragend ein Traggriff 22 mit einer zum Ergreifen vorgesehenen Hinterschneidung 23 gebildet, durch den der Zentrifugenrotor 10 ergriffen und getragen werden kann ohne den Deckel 14 dadurch zu lösen.

Der Deckel 14 ist einstückig ausgebildet und weist einen Betätigungsgriff 24 mit einer zum Ergreifen vorgesehenen Hinterschneidung 25 auf.

Zwischen Unterteil 12 und Deckel 14 bildet sich ein Probenraum 26 aus, der durch die zwischen Unterteil 12 und Deckel 14 angeordnete äußere 28 und innere Abdichtung 30, die jeweils gegenüber der Drehachse D rotationssymmetrisch ausgebildet sind, aerosoldicht abgedichtet ist. Von diesem Probenraum 26 aus sind die Fächer 16 und damit die einzelnen Probengefäße zugänglich.

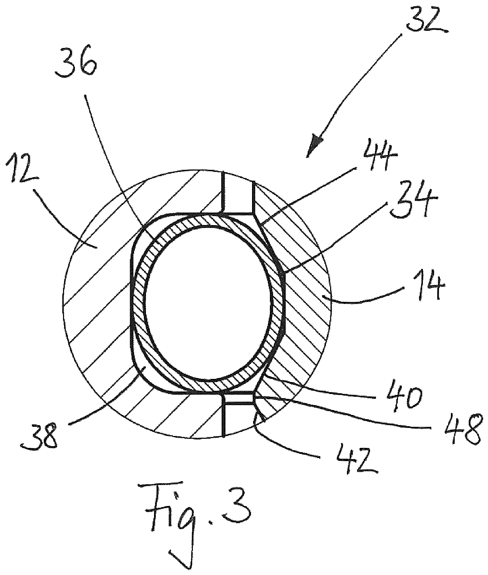

Weiterhin ist zwischen dem Unterteil 12 und dem Deckel 14 ein Verschluss 32 ausgebildet, der in Fig. 3 in einer Detailansicht gezeigt ist.

Es ist zu erkennen, dass der Verschluss 32 durch drei Elemente 34, 36, 38 gebildet wird, nämlich eine erste Vertiefung 34 in dem Deckel 14, das Federelement 36 und die zweite Vertiefung 38, die das Federelement 36 hält.

Die erste Vertiefung 34, die als Ringnut ausgebildet ist, ist senkrecht zur Drehachse D sich zur Drehachse D hin öffnend ausgebildet und weist eine erste Fase 40, eine zweite Fase 42 und eine dritte Fase 44 auf, wobei die Fasen 40, 42, 44 jeweils gegenüber der Drehachse D einen Winkel von 30° aufweisen. Die Tiefe der ersten Vertiefung 34 gegenüber der inneren Umfangsfläche des Betätigungsgriffs 24 beträgt 1 mm. Die Höhe der ersten Vertiefung 34 ist im Zusammenhang mit der ersten Fase 40 und der dritten Fase 44 so ausgebildet, dass das Federelement 36 im geschlossenen Zustand des Verschlusses 32 pressförmig aufgenommen ist.

Während zwischen dem Betätigungsgriff 24 des Deckels 14 und der Nabe 18 des Unterteils 12 ein Passsitz besteht, ist der Deckel 14 im Bereich des Verschlusses 32 vom Unterteil 12 radial beabstandet angeordnet, wobei der Abstand 1 mm beträgt.

Die zweite Vertiefung 38 weist etwa einen rechteckigen Querschnitt auf, wobei die Ecken herstellungsbedingt gerundet ausgeführt sind. Die Tiefe der zweiten Vertiefung 38 gegenüber der äußeren Umfangsfläche der Nabe 18 beträgt 3 mm. Die Höhe der zweiten Vertiefung 38 ist so ausgebildet, dass das Federelement 36 im geschlossenen Zustand des Verschlusses 32 pressförmig aufgenommen ist.

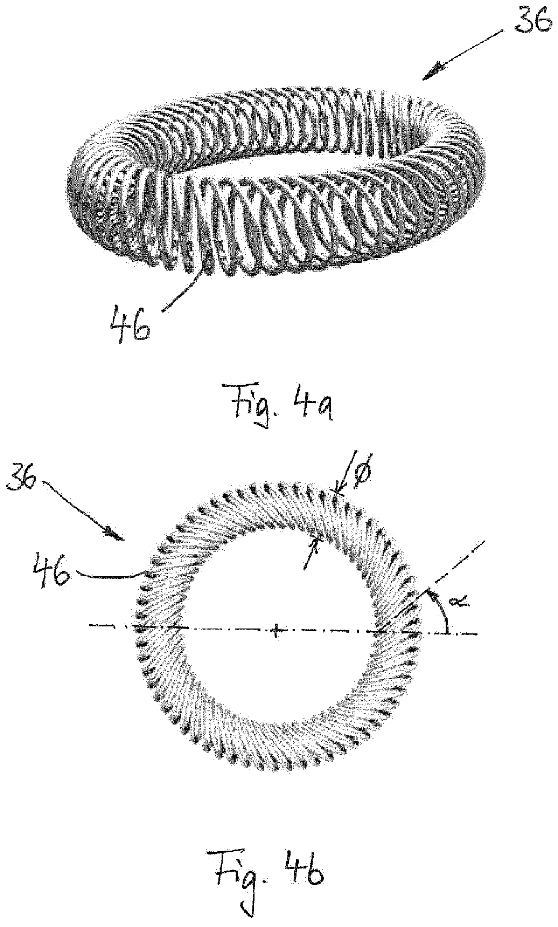

Das Federelement 36 ist als Diametralfeder ausgebildet, wie in den Fig. 4a und 4b näher gezeigt ist. Es handelt sich also um eine Ringfeder, die durch Zusammenfügen, bevorzugt Schweißen, der Enden einer Spiralfeder gebildet wurde. Dabei sind die Windungen 46 in Bezug auf die Richtung des Querschnitts der Feder nicht parallel, sondern in eine Richtung definiert geneigt angeordnet. Der Neigungswinkel α, der in Bezug auf den Radius gemessen wird, liegt im Bereich 40° bis 50°, im Gegensatz zu bei Ringfedern aus gewöhnlichen Spiralfedern, wo dieser Winkel 0° beträgt. Der Querschnitt Ø der Windungen 46 beträgt 5,1 mm.

Da die Tiefe der zweiten Vertiefung 38 somit mehr als die Hälfte des Querschnitts Ø der Windungen 46 des Federelements 36 beträgt, wird das Federelement 36 sicher in der zweiten Vertiefung 38, die als Ringnut ausgebildet ist, gehalten.

Bevorzugt weist die Diametralfeder 36 50 bis 100 Windungen aus einem hochlegierten Federstahl X7CrNiAl177 bzw. Werkstoff-Nr. 14568 nach DIN EN 10270-3 in einer Stärke von 0,4 mm auf. Anstelle dieses speziellen Federstahls können auch andere federnde Materialien eingesetzt werden. Außerdem könnte anstelle der Diametralfeder 36 auch ein O-Ring verwendet werden.

Durch diese besondere Neigung der Windungen 46 lässt sich die Diametralfeder 36 in axialer Richtung nur sehr wenig aber in radialer Richtung sehr leicht komprimieren, wobei die Diametralfeder 36 aufgrund ihrer Federelastizität stets ihre Ausgangsform wiedererlangen will.

Fig. 3 zeigt einen geschlossenen Zustand des Verschlusses 32 zwischen dem Unterteil 12 und dem Deckel 14. Um diesen zu erreichen wurde der Deckel 14 in Schließrichtung S auf das Unterteil 12 so aufgesetzt, dass der Betätigungsgriff 24 auf der Nabe 18 nach unten gleiten kann. Im Verlauf dieser Abwärtsbewegung wird die zweite Fase 42 mit dem Federelement 36 zur Anlage kommen, wodurch sowohl axiale, als auch radiale Kräfte auf das Federelement 36 ausgeübt werden. Das Federelement 36 wiedersteht weitestgehend den axialen Kräften und setzt diese ebenfalls in radiale Kräfte um, die insgesamt bewirken, dass die Windungen 46 radial verschwenkt werden, wodurch sich der radiale Anteil des Querschnitts Ø verringert.

Dadurch kann die Erhöhung 48, die sich zwischen der zweiten 42 und der ersten Fase 40 befindet, an dem Federelement 36 vorbeigleiten, wodurch das Federelement 36 in die erste Vertiefung 34 eindringt. Dadurch kann sich das Federelement 36 wieder entspannen und kommt dabei zur Anlage mit der ersten Fase 40, wodurch im Zusammenhang mit der Entspannung des Federelements 36 der Deckel 14 automatisch in Schließrichtung S auf das Unterteil 12 gezogen wird, bis das Federelement 36 zur Anlage mit der dritten Fase 44 kommt und sich eine Zentrierung des Federelements 36 in der ersten Vertiefung 34 einstellt.

Da die erste Vertiefung 34 symmetrisch ausgebildet ist und sich im geschlossenen Zustand des Deckels 14 exakt gegenüber der zweiten Vertiefung 38 befindet, ist der Verschluss 32 im geschlossenen Zustand des Deckels 11 keinen axialen Kräften ausgesetzt.

Es könnte allerdings auch vorgesehen sein, dass die erste Fase 40 mit einer stärkeren Neigung verläuft als die dritte Fase 44, die somit mehr senkrecht zur Drehachse D verläuft, wodurch das Federelement 36 eine stärkere Kraft auf die erste Fase 40 ausübt und dadurch der Deckel 14 gegenüber dem Unterteil 12 in Schließrichtung S vorgespannt wird.

Außerdem könnte auch die Lage der ersten Vertiefung 34 zur zweiten Vertiefung 38 im geschlossenen Zustand des Deckels 14 so verändert werden, dass die erste Vertiefung 34 in Lösrichtung versetzt zur zweiten Vertiefung 38 angeordnet ist. Dadurch wird auch durch das Federelement 36 eine Kraft auf den Deckel 14 ausgeübt.

Zugleich werden die Abdichtungen 28, 30 verschlossen, wodurch der Probenraum 26 abgedichtet ist. Dadurch, dass der Verschluss 32 sich in Bezug auf die Abdichtungen 28, 30 außerhalb des Probenraums 26 befindet, ist die Qualität der Abdichtung des Probenraumes 26 nur von den verwendeten Abdichtungen 28, 30 abhängig. Wenn dabei ringförmige Gummidichtungen verwendet werden, die zur Anlage mit Pressflächen kommen, dann lässt sich sogar eine aerosoldichte Abdichtung des Probenraumes 26 gegenüber der Umgebung erzielen.

In diesem Zusammenhang ist vorzugsweise vorgesehen, dass der Deckel 14 ein wenig über die zentrierte Stellung des Federelements 36 in der ersten Vertiefung 34 hinaus in Richtung Unterteil 12 entlang der Schließrichtung S bewegt werden kann.

Um den Verschluss 32 wieder zu lösen, muss der Benutzer den Deckel 14 mithilfe des Betätigungsgriffs 24 einfach vom Unterteil 12 in Lösrichtung L abheben, wozu er beispielsweise den Betätigungsgriff 24 mit Zeige- und Mittelfinger ergreifen und hochziehen und mit dem Daumen dabei auf den Tragegriff 22 Gegendruck erzeugen kann. Dabei gleitet der Betätigungsgriff 24 auf der Nabe 18 nach oben. Im Verlauf dieser Aufwärtsbewegung wird das Federelement 36 mit der ersten Fase 40 immer stärker zur Anlage kommen, wodurch sowohl axiale, als auch radiale Kräfte auf das Federelement 36 ausgeübt werden. Das Federelement 36 wiedersteht weitestgehend den axialen Kräften und setzt diese ebenfalls in radiale Kräfte um, die insgesamt bewirken, dass die Windungen 46 radial verschwenkt werden, wodurch sich der radiale Anteil des Querschnitts Ø verringert.

Dadurch kann die Erhöhung 48 an dem Federelement 36 vorbeigleiten, wodurch das Federelement 36 außer Eingriff mit der ersten Vertiefung 34 gebracht wird und der Deckel 14 vollständig von dem Unterteil 12 abgenommen werden kann.

Damit ist klar, dass es sich um eine echte Einhandbedienung handelt, weil zum Aufsetzen des Deckels 14 auf das Unterteil 12 und Verschließen des Verschlusses 32 sowie zum Lösen des Verschlusses 32 und Abnehmen des Deckels 14 von dem Unterteil 12 jeweils nur eine Hand benötigt wird.

Außerdem besitzt der Verschluss 32 nur drei Elemente, während beispielsweise der Verschluss der EP 2 024 097 A1 mehr als 10 Elemente umfasst. Dabei ist der Verschluss 32 leicht wartbar, weil dazu nur die Diametralfeder 36 ausgetauscht werden muss. Außerdem lässt sich der Verschluss 32 leicht herstellen, weil die erste 34 und zweite Vertiefung 38 durch Drehen hergestellt werden können und kein Fräsen erforderlich ist.

Der Verschluss 32 ist sehr leichtgängig und besonders sicher, weil durch die beim Zentrifugieren wirkenden Fliehkräfte keine axiale Krafteinwirkung auf den Verschluss 32 erfolgt, sondern nur radiale Kräfte wirken, die die Diametralfeder 36 weiter gegenüber der ersten Vertiefung 34 verspannen.

Die Stärke des Verschlusses 32 kann auf vielfältige Weise beeinflusst und daher gezielt eingestellt werden, wobei folgende Faktoren unter anderem einen Einfluss haben:
- die Tiefe der ersten Vertiefung 34, weil die Kraft des Verschlusses wächst, je mehr die Diametralfeder 36 durch die erste Vertiefung 34 komprimiert wird,
- die Federkraft der Diametralfeder 36, die durch die Drahtstärke, die Anzahl der Windungen, das Drahtmaterial und die Geometrie der Diametralfeder 36, insbesondere den Windungswinkel bestimmt ist, und
- die Winkel der ersten Fase 40.

Auch wenn vorstehend als Federelement eine Diametralfeder 36 beschrieben wurde, ist doch klar, dass auch andere Federelemente verwendbar sind. Beispielsweise könnte es sich um Stahlkugeln handeln, die gegen jeweils eine Feder vorgespannt sind und die in die erste Vertiefung 34 eingreifen. Dabei kann es sich um eine Anzahl gleich beabstandeter Stahlkugeln handeln. Es könnte anstelle der Diametralfeder 36 auch ein gummielastischer O-Ring verwendet werden. Außerdem könnte keine durchgehende Diametralfeder 36, sondern einzelne Diametralfederabschnitte verwendet werden, wobei dann die Lagerung dieser Abschnitte in entsprechend abschnittsweise angeordneten zweiten Vertiefungsabschnitten erfolgt. Außerdem könnten auch anstelle von federbelasteten Kugeln Blattfedern mit entsprechend ausgeformten Rundungen oder Vorsprüngen verwendet werden, die in die erste Vertiefung 34 eingreifen.

Mit dem Traggriff 22 lässt sich der gesamte Zentrifugenrotor 10 auch im geschlossenen Zustand des Verschlusses 32 sehr einfach und sicher tragen, weil durch die den Tragegriff 22 umschließenden Finger gleichzeitig der Betätigungsgriff 24 in Schließrichtung S nach unten gedrückt wird.

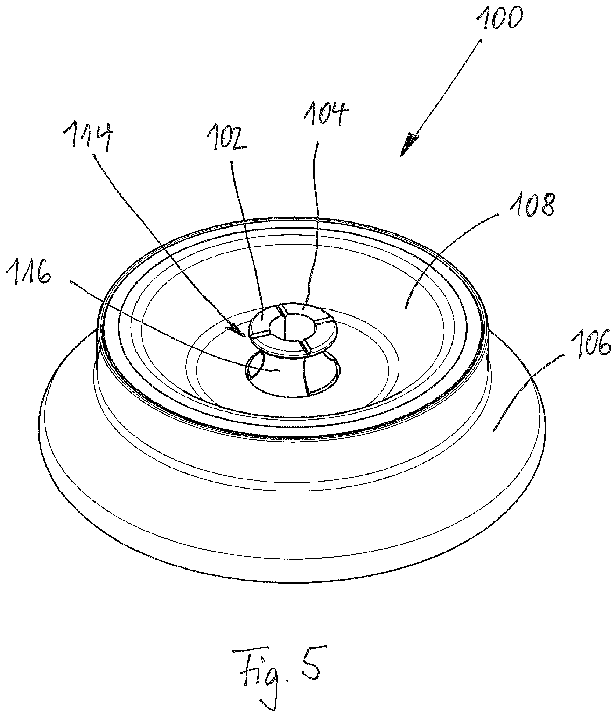

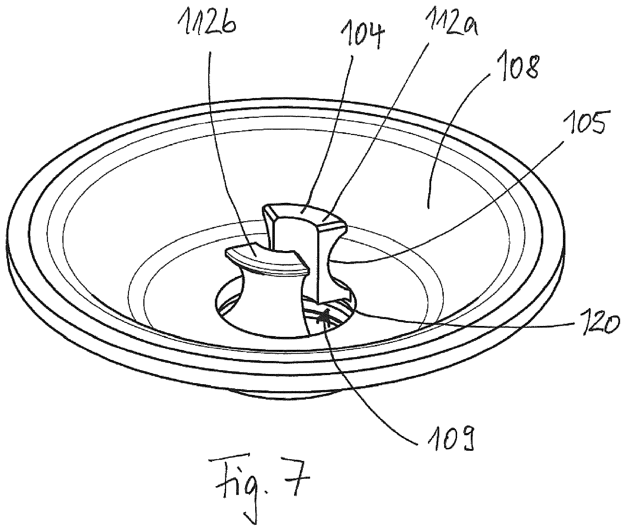

In den Fig. 5 bis 7 ist eine zweite bevorzugte Ausführungsform des erfindungsgemäßen Zentrifugenrotors 100 gezeigt. Dieser Zentrifugenrotor 100 unterscheidet sich nur in Bezug auf die Ausgestaltung von Traggriff 102 und Betätigungsgriff 104, während die übrige Ausgestaltung des Unterteils 106 und des Deckels 108, insbesondere in Bezug auf den Verschluss 109 identisch ist und daher nicht noch einmal erläutert wird.

Es ist zu erkennen, dass im Gegensatz zum Zentrifugenrotor 10 hier der Betätigungsgriff 104 und der Traggriff 102 so ausgebildet sind, dass sie sich im geschlossenen Zustand des Deckels 108 auf dem Unterteil 106 zu einem einheitlichen Element 102, 104 ergänzen.

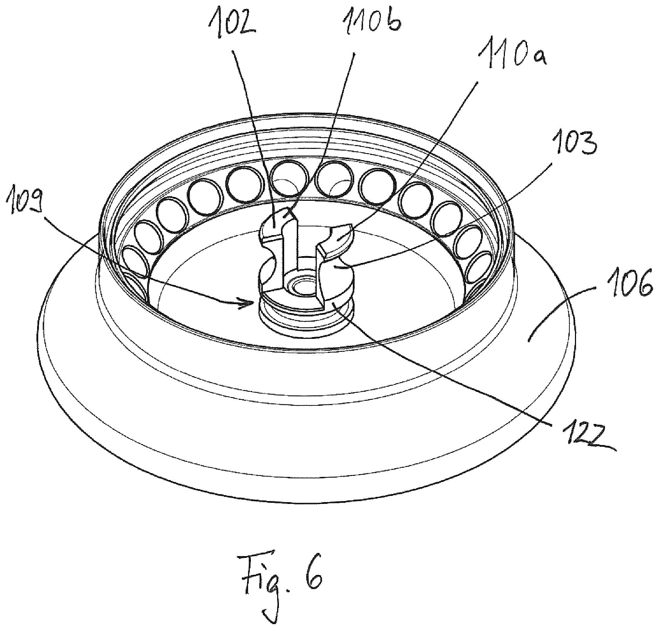

Genauer gesagt ist der Traggriff 102 entsprechend Fig. 6 mit zwei gegenüberliegend angeordneten Traggriffelementen 110a, 110b und jeweiligen Hinterschneidungen 103 zum Ergreifen des Traggriffs 102 ausgebildet und der Betätigungsgriff 104 ist mit zwei gegenüberliegend angeordneten Betätigungsgriffelementen 112a, 112b und jeweiligen Hinterschneidungen 105 zum Ergreifen des Betätigungsgriffs 104 ausgebildet, die im geschlossenen Zustand des Deckels 108 auf dem Unterteil 106 passförmig ineinandergreifen, wobei ihre Konturen so abgestimmt sind, dass sie sich rotationssymmetrisch zu einem einheitlichen Griff 114 mit einheitlicher Hinterschneidung 116 ergänzen. Dabei stehen die Betätigungsgriffelemente 112a, 112b radial nach innen in Bezug auf eine Öffnung 120 vor, wobei diese Öffnung 120 angepasst ist, die Nabe 122 des Unterteils 106 passförmig aufzunehmen.

Dadurch ergibt sich insgesamt ein größerer Griff 114, der einen größeren Durchmesser aufweisen kann als bei dem Zentrifugenrotor 10, da der Traggriff 102 nicht mehr einen kleineren Durchmesser als der Betätigungsgriff 104 aufweisen muss. Der Zentrifugenrotor 100 lässt sich dadurch einfacher und komfortabler handhaben, d.h. transportieren sowie öffnen und schließen.

Etwas nachteilig ist bei dieser Ausgestaltung, dass der Deckel 108 nun nicht mehr frei auf dem Unterteil 106 positioniert werden kann, sondern nur mit einer Winkelausrichtung von 90° zwischen dem Traggriff 102 und dem Betätigungsgriff 104. Um zu vermeiden, dass der Benutzer ausversehen beim Tragen nur den Betätigungsgriff 104 ergreift, nicht jedoch zumindest auch den Traggriff 102, ist bevorzugt vorgesehen, dass der Traggriff 102 dieselbe Farbe, beispielsweise schwarz aufweist, wie der restliche Teil des Unterteils 106, während der Betätigungsgriff 104 dieselbe Farbe, beispielsweise rot aufweist, wie der restliche Teil des Deckels 108.

Auch wenn in den beschriebenen Ausführungsbeispielen das Federelement 36 in einer als Ringnut ausgebildeten zweiten Vertiefung 38 der Nabe 18 angeordnet ist und das Federelement 36 in eine erste Vertiefung 34 eingreift, die an dem Deckel 14 angeordnet ist, so ist doch klar, dass auch eine umgekehrte Ausgestaltung gewählt werden kann, bei der das Federelement am Deckel angeordnet ist und in eine erste an der Nabe angeordnete Vertiefung eingreift.

Dies könnte in den gezeigten Ausführungsbeispielen einfach dadurch umgesetzt werden, dass nicht die Ringnut 38 der Nabe 18 sich über mehr als die Hälfte des Querschnitt Ø der Windungen 46 des Federelements 36 erstreckt, sondern die Ringnut 34 des Deckels. Dadurch würde das Federelement 36 in der Ringnut 34 des Deckels verbleiben und die Ringnut 38 der Nabe 18 würde die erste Vertiefung bilden, in die das Federelement 346 bei Verschlussvorgang eingreift. Dazu könnten einfach die Querschnitte der Ringnut 34 und der Ringnut 38 vertauscht werden.

Aus der vorstehenden Darstellung ist deutlich geworden, dass mit der vorliegenden Erfindung ein Zentrifugenrotor 10, 100 bereitgestellt wird, bei dem der Verschluss zwischen dem Unterteil des Zentrifugenrotors 10, 100 und dem Deckel 14, 108 so verbessert wurde, dass eine echte Einhandbedienbarkeit ermöglicht wird. Insbesondere ist der Verschluss mit nur einer Hand verschließbar und wieder lösbar. Dabei ist der Verschluss konstruktiv einfacher und auch kostengünstiger herstellbar.

### Bezugszeichenliste

- 10: erste bevorzugte Ausgestaltung des erfindungsgemäßen Zentrifugenrotors
- 12: Unterteil
- 14: Deckel
- 16: Bohrungen bzw. Fächer zur Aufnahme von Probengefäßen
- 18: Nabe
- 20: Bohrung in Nabe 18
- 22: Traggriff
- 23: Hinterschneidung zum Ergreifen des Traggriffs 22
- 24: Betätigungsgriff
- 25: Hinterschneidung zum Ergreifen des Betätigungsgriffs 24
- 26: Probenraum
- 28: äußere Abdichtung zwischen Unterteil 12 und Deckel 14
- 30: innere Abdichtung zwischen Unterteil 12 und Deckel 14
- 32: Verschluss zwischen Unterteil 12 und Deckel 14
- 34: erste Vertiefung in dem Deckel
- 36: Federelement, Ringfeder, Diametralfeder
- 38: zweite Vertiefung in der Nabe 18
- 40: erste Fase, Löshilfe
- 42: zweite Fase, Schließhilfe
- 44: dritte Fase
- 46: Windungen des Federelements 36
- 48: Erhöhung zwischen der zweiten 42 und der ersten Fase 40
- 100: zweite bevorzugte Ausführungsform des erfindungsgemäßen Zentrifugenrotors
- 102: Traggriff
- 103: Hinterschneidung zum Ergreifen des Traggriffs 102
- 104: Betätigungsgriff
- 105: Hinterschneidung zum Ergreifen des Betätigungsgriffs 104
- 106: Unterteil
- 108: Deckel
- 109: Verschluss
- 110a, 110b: Traggriffelemente
- 112a, 112b: Betätigungsgriffelementen
- 114: einheitlicher Griff
- 116: Hinterschneidung des einheitlichen Griffs 114
- 120: Öffnung in Deckel 108
- 122: Nabe des Unterteils 106
- α: Neigungswinkel der Windungen 46
- Ø: Querschnitt der Windungen 46
- D: Drehachse D
- L: Lösrichtung
- S: Schließrichtung

## Patentansprüche

1. Zentrifugenrotor (10; 100) mit einem Unterteil (12; 106) und einem Deckel (14; 108), wobei der Zentrifugenrotor (10; 100) eine Drehachse (D) aufweist, wobei der Deckel (14; 108) auf das Unterteil (12; 106) entlang der Drehachse (D) in einer Schließrichtung (S) aufsteckbar und entlang der Drehachse (D) in einer Lösrichtung (L) abnehmbar ist, wobei im geschlossenen Zustand des Deckels (14; 108) ein Verschluss (32; 109) zwischen dem Unterteil (12; 106) und dem Deckel (14; 108) besteht, wobei zumindest eines der Elemente Unterteil (12; 106) und Deckel (14; 108) zumindest eine erste Vertiefung (34) aufweist, **dadurch gekennzeichnet, dass** in die besagte erste Vertiefung (34) im geschlossenen Zustand des Deckels (14; 108) zumindest ein Federelement (36) eingreift, das an dem anderen der Elemente Deckel (14; 108) und Unterteil (12; 106) angeordnet ist, und dass das Federelement als Ringelement ausgebildet ist.

2. Zentrifugenrotor (10; 100) nach Anspruch 1, **dadurch gekennzeichnet, dass** die erste Vertiefung (34) und das Federelement (36) angepasst sind, eine Clipsverbindung bereitzustellen.

3. Zentrifugenrotor (10; 100) nach Anspruch 1 oder 2, **dadurch gekennzeichnet, dass** die erste Vertiefung (34) sich senkrecht zur Drehachse (D) öffnend, bevorzugt asymmetrisch ausgebildet ist und/oder dass die erste Vertiefung als erste Ringnut (34) ausgebildet ist.

4. Zentrifugenrotor (10; 100) nach einem der Ansprüche 1 bis 3, **dadurch gekennzeichnet, dass** die erste Vertiefung (34) eine Löshilfe aufweist, die bevorzugt als erste Fase (40) oder Rundung ausgebildet ist, durch die das Federelement (36) beim Abnehmen des Deckels (14; 108) vom Unterteil (12; 106) außer Eingriff mit der ersten Vertiefung (34) gebracht wird.

5. Zentrifugenrotor (10; 100) nach einem der vorherigen Ansprüche, **dadurch gekennzeichnet, dass** in Bezug auf die Schießrichtung (S) zwischen der ersten Vertiefung (34) und dem Unterteil (12; 106) eine Schließhilfe angeordnet ist, die bevorzugt als zweite Fase (42) oder Rundung ausgebildet ist, durch die das Federelement (36) beim Aufstecken des Deckels (14; 108) auf das Unterteil (12; 106) in Eingriff mit der ersten Vertiefung (34) gebracht wird.

6. Zentrifugenrotor (10; 100) nach einem der vorherigen Ansprüche, **dadurch gekennzeichnet, dass** die erste Vertiefung (34) in Bezug auf die Lösrichtung (L) auf der vom Unterteil (12; 106) abgewandten Seite eine dritte Fase (44) oder Rundung aufweist.

7. Zentrifugenrotor (10; 100) nach einem der Ansprüche 4 bis 6, **dadurch gekennzeichnet, dass** die erste (40) und/oder die zweite (42) und/oder die dritte Fase (44) in Bezug auf die Drehachse (D) einen Winkel im Bereich 30° bis 80°, bevorzugt 45° bis 75°, insbesondere 60° aufweist.

8. Zentrifugenrotor (10; 100) nach einem der vorherigen Ansprüche, **dadurch gekennzeichnet, dass** das Federelement als Ringfeder, insbesondere als Diametralfeder (36) ausgebildet ist.

9. Zentrifugenrotor (10; 100) nach einem der vorherigen Ansprüche, **dadurch gekennzeichnet, dass** das Federelement (36) in einer zweiten Vertiefung (38) angeordnet ist, die bevorzugt als zweite Ringnut (38) ausgebildet ist, wobei die zweite Ringnut (38) insbesondere in Bezug auf die Drehachse (D) senkrecht verlaufende seitliche Begrenzungen aufweist.

10. Zentrifugenrotor (10; 100) nach Anspruch 9, **dadurch gekennzeichnet, dass** das Federelement (36) einen Querschnitt (Ø) in Bezug auf dessen Windungen (46) aufweist und sich im geöffneten Zustand des Deckels (14; 108) zumindest ein Viertel, bevorzugt zumindest die Hälfte dieses Querschnitts (Ø) in der zweiten Vertiefung (38) befindet.

11. Zentrifugenrotor (10; 100) nach einem der vorherigen Ansprüche, **dadurch gekennzeichnet, dass** der Deckel (14; 108) und/oder das Unterteil (12; 106) eine Hinterschneidung (23; 103, 105) aufweist, die als Griff (22; 102, 114) zum Tragen des Zentrifugenrotors (10; 100) dient, wobei die Hinterschneidung (23; 103, 105) bevorzugt gegenüber dem Deckel (14; 108) vorspringt.

12. Zentrifugenrotor (10; 100) nach einem der vorherigen Ansprüche, **dadurch gekennzeichnet, dass** ein Teil (22; 102, 110a, 110b) des Unterteils (12; 106) im geschlossenen Zustand durch den Deckel (14; 108) hindurchreicht und als Traghilfe (22; 102) für den Zentrifugenrotor (10; 100) dient, wobei dieses Teil bevorzugt gegenüber dem Deckel (14; 108) farblich abgesetzt ist.

13. Zentrifugenrotor (100) nach Anspruch 12, **dadurch gekennzeichnet, dass** das Teil (110a, 110b) des Unterteils (106) als zumindest zwei in Bezug auf die Drehachse (D) beabstandet und/oder gegenüberliegend angeordnete Traggriffelemente (110a, 110b) ausgebildet ist, die sich bevorzugt mit korrespondierenden Elementen (112a, 112b) des Deckels (108) zu einem durchgehend ausgebildeten Griff (114) ergänzen.

14. Zentrifugenrotor (10; 100) nach einem der vorherigen Ansprüche, **dadurch gekennzeichnet, dass** der Deckel (14; 108) in Bezug auf den Verschluss (32; 109) ohne bewegliche Teile ausgebildet, bevorzugt einstückig ist.

15. Zentrifugenrotor (10; 100) nach einem der vorherigen Ansprüche, **dadurch gekennzeichnet, dass** eine bevorzugt aerosoldichte Abdichtung (28, 30) zwischen Deckel (14; 108) und Unterteil (12; 106) besteht, so dass der Verschluss (32; 109) in Bezug auf die Abdichtung (28, 30) außerhalb eines zwischen Deckel (14; 108) und Unterteil (12; 106) gebildeten Probenraums (26) angeordnet ist.

## Claims

1. Centrifuge rotor (10; 100) comprising a lower part (12; 106) and a cover (14; 108), wherein the centrifuge rotor (10; 100) has an axis of rotation (D), wherein the cover (14; 108) can be pushed onto the lower part (12; 106) along the axis of rotation (D) in a closure direction (S) and can be removed along the axis of rotation (D) in a release direction (L), wherein in the closed state of the cover (14; 108) a lock (32; 109) exists between the lower part (12; 106) and the cover (14; 108), wherein at least one of the elements of the lower part (12; 106) and cover (14; 108) comprises at least one first depression (34), **characterised in that**, in the closed state of the cover (14; 108), at least one spring element (36) engages in said first depression (34), which spring element is arranged on the other of the elements of the cover (14; 108) and lower part (12; 106), and **in that** the spring element is configured as a ring element.

2. Centrifuge rotor (10; 100) according to claim 1, **characterised in that** the first depression (34) and the spring element (36) are adjusted so as to provide a clip connection.

3. Centrifuge rotor (10; 100) according to either claim 1 or claim 2, **characterised in that** the first depression (34) is configured so as to open perpendicularly to the axis of rotation (D), preferably asymmetrically, and/or **in that** the first depression is configured as a first annular groove (34).

4. Centrifuge rotor (10; 100) according to any of claims 1 to 3, **characterised in that** the first depression (34) comprises a release aid which is preferably designed as a first chamfer (40) or rounding and by means of which the spring element (36) is brought out of engagement with the first depression (34) when the cover (14; 108) is removed from the lower part (12; 106).

5. Centrifuge rotor (10; 100) according to any of the preceding claims, **characterised in that**, with respect to the closure direction (S), a closing aid is arranged between the first depression (34) and the lower part (12; 106), which closing aid is preferably formed as a second chamfer (42) or rounding and by means of which the spring element (36) is brought into engagement with the first depression (34) when the cover (14; 108) is pushed onto the lower part (12; 106).

6. Centrifuge rotor (10; 100) according to any of the preceding claims, **characterised in that** the first depression (34) comprises a third chamfer (44) or rounding on the side remote from the lower part (12; 106), with respect to the release direction (L).

7. Centrifuge rotor (10; 100) according to any of claims 4 to 6, **characterised in that** the first (40) and/or the second (42) and/or the third chamfer (44) is at an angle in the range of 30° to 80°, preferably 45° to 75°, in particular 60°, with respect to the axis of rotation (D).

8. Centrifuge rotor (10; 100) according to any of the preceding claims, **characterised in that** the spring element is configured as an annular spring, in particular as a diametral spring (36).

9. Centrifuge rotor (10; 100) according to any of the preceding claim, **characterised in that** the spring element (36) is arranged in a second depression (38) which is preferably designed as an annular groove (38), wherein the second annular groove (38) comprises perpendicularly extending lateral boundaries, in particular with respect to the axis of rotation (D).

10. Centrifuge rotor (10; 100) according to claim 9, **characterised in that** the spring element (36) has a cross section (Ø) with respect to its windings (46), and, in the open state of the cover (14; 108), at least a quarter, preferably at least half, of said cross section (Ø) is located in the second depression (38).

11. Centrifuge rotor (10; 100) according to any of the preceding claims, **characterised in that** the cover (14; 108) and/or the lower part (12; 106) comprises an undercut (23; 103, 105) which serves as a handle (22; 102, 114) for carrying the centrifuge rotor (10; 100), wherein the undercut (23; 103, 105) preferably protrudes relative to the cover (14; 108).

12. Centrifuge rotor (10; 100) according to any of the preceding claims, **characterised in that** a part (22; 102, 110a, 110b) of the lower part (12; 106) reaches through the cover (14; 108) in the closed state and serves as a carrying aid (22; 102) for the centrifuge rotor (10; 100), wherein said part is preferably of a contrasting colour compared with the cover (14; 108).

13. Centrifuge rotor (100) according to claim 12, **characterised in that** the part (110a, 110b) of the lower part (106) is configured as at least two carrying handle elements (110a, 110b) which are spaced apart and/or arranged opposite with respect to the axis of rotation (D) and which are preferably complemented by corresponding elements (112a, 112b) of the cover (108), to form a continuous handle (114).

14. Centrifuge rotor (10; 100) according to any of the preceding claims, **characterised in that** the cover (14; 108) is formed without movable parts with respect to the lock (32; 109), preferably is formed in one piece.

15. Centrifuge rotor (10; 100) according to any of the preceding claims, **characterised in that** a preferably aerosol-tight seal (28, 30) exists between the cover (14; 108) and lower part (12; 106), such that the lock (32; 109) is arranged outside a sample space (26), formed between the cover (14; 108) and lower part (12; 106), with respect to the seal (28, 30).

## Revendications

1. Rotor de centrifugeuse (10 ; 100) avec une partie inférieure (12 ; 106) et un couvercle (14 ; 108), dans lequel le rotor de centrifugeuse (10 ; 100) présente un axe de rotation (D), dans lequel le couvercle (14 ; 108) peut être emboîté sur la partie inférieure (12 ; 106) le long de l'axe de rotation (D) dans une direction de fermeture (S) et peut être retiré dans une direction de desserrage (L) le long de l'axe de rotation (D), dans lequel une fermeture (32 ; 109) entre la partie inférieure (12 ; 106) et le couvercle (14 ; 108) existe dans l'état fermé du couvercle (14 ; 108), dans lequel
au moins un des éléments, partie inférieure (12 ; 106) et couvercle (14 ; 108), présente au moins un premier renfoncement (34), **caractérisé en ce que** vient en prise avec ledit premier évidement (34), dans l'état fermé du couvercle (14 ; 108), au moins un élément de ressort (36), qui est disposé sur l'autre des éléments, couvercle (14 ; 108) et partie inférieure (12 ; 106), et que l'élément de ressort est réalisé en tant qu'élément annulaire.

2. Rotor de centrifugeuse (10 ; 100) selon la revendication 1, **caractérisé en ce que** le premier renfoncement (34) et l'élément de ressort (36) sont adaptés pour fournir un raccordement par clipsage.

3. Rotor de centrifugeuse (10 ; 100) selon la revendication 1 ou 2, **caractérisé en ce que** le premier renfoncement (34) est réalisé de manière préférée de manière asymétrique tout en s'ouvrant de manière perpendiculaire par rapport à l'axe de rotation (D), et/ou que le premier renfoncement est réalisé en tant que première rainure annulaire (34).

4. Rotor de centrifugeuse (10 ; 100) selon l'une quelconque des revendications 1 à 3, **caractérisé en ce que** le premier renfoncement (34) présente une aide au desserrage, qui est réalisée de manière préférée en tant que premier chanfrein (40) ou arrondi, par lequel l'élément de ressort (36) est amené hors prise d'avec le premier renfoncement (34) lors du retrait du couvercle (14 ; 108) de la partie inférieure (12 ; 106).

5. Rotor de centrifugeuse (10 ; 100) selon l'une quelconque des revendications précédentes, **caractérisé en ce qu'**est réalisée, par rapport à la direction de fermeture (S), entre le premier renfoncement (34) et la partie inférieure (12 ; 106), une aide à la fermeture, qui est réalisée de manière préférée en tant que deuxième chanfrein (42) ou arrondi, par lequel l'élément de ressort (36) est amené en prise avec le premier renfoncement (34) lors de l'emboîtement du couvercle (14 ; 108) sur la partie inférieure (12 ; 106).

6. Rotor de centrifugeuse (10 ; 100) selon l'une quelconque des revendications précédentes, **caractérisé en ce que** le premier renfoncement (34) présente, par rapport à la direction de desserrage (L) sur le côté opposé à la partie inférieure (12 ; 106) un troisième chanfrein (44) ou arrondi.

7. Rotor de centrifugeuse (10 ; 100) selon l'une quelconque des revendications 4 à 6, **caractérisé en ce que** le premier (40) et/ou le deuxième (42) et/ou le troisième chanfrein (44) présentent par rapport à l'axe de rotation (D) un angle dans la plage de 30° à 80°, de manière préférée de 45° à 75°, en particulier de 60°.

8. Rotor de centrifugeuse (10 ; 100) selon l'une quelconque des revendications précédentes, **caractérisé en ce que** l'élément de ressort est réalisé en tant que ressort annulaire, en particulier en tant que ressort diamétral (36).

9. Rotor de centrifugeuse (10 ; 100) selon l'une quelconque des revendications précédentes, **caractérisé en ce que** l'élément de ressort (36) est disposé dans un deuxième renfoncement (38), qui est réalisé de manière préférée en tant que deuxième rainure annulaire (38), dans lequel la deuxième rainure annulaire (38) présente en particulier par rapport à l'axe de rotation (D) des délimitations latérales s'étendant de manière perpendiculaire.

10. Rotor de centrifugeuse (10 ; 100) selon la revendication 9, **caractérisé en ce que** l'élément de ressort (36) présente une section transversale (Ø) par rapport à ses spires (46) et qu'au moins un quart, de manière préférée au moins la moitié de ladite section transversale (Ø) se trouve, dans l'état ouvert du couvercle (14 ; 108), dans le deuxième renfoncement (38).

11. Rotor de centrifugeuse (10 ; 100) selon l'une quelconque des revendications précédentes, **caractérisé en ce que** le couvercle (14 ; 108) et/ou la partie inférieure (12 ; 106) présentent une contre-dépouille (23 ; 103, 105), qui sert de poignée (22 ; 102, 114) destinée à transporter le rotor de centrifugeuse (10 ; 100), dans lequel la contre-dépouille (23 ; 103, 105) fait saillie de manière préférée par rapport au couvercle (14 ; 108).

12. Rotor de centrifugeuse (10 ; 100) selon l'une quelconque des revendications précédentes, **caractérisé en ce qu'**une partie (22 ; 102, 110a, 110b) de la partie inférieure (12 ; 106) traverse le couvercle (14 ; 108) de part en part dans l'état fermé et sert de poignée de transport (22 ; 102) pour le rotor de centrifugeuse (10 ; 100), dans lequel ladite partie présente de manière préférée un coloris contrasté par rapport au couvercle (14 ; 108).

13. Rotor de centrifugeuse (100) selon la revendication 12, **caractérisé en ce que** la partie (110a, 110b) de la partie inférieure (106) est réalisée en tant qu'au moins deux éléments de poignée de transport (110a, 110b) disposés à distance et/ou en vis-à-vis par rapport à l'axe de rotation (D), qui se complètent de manière préférée avec des éléments (112a, 112b) correspondants du couvercle (108) pour former une poignée (114) réalisée de manière continue.

14. Rotor de centrifugeuse (10 ; 100) selon l'une quelconque des revendications précédentes, **caractérisé en ce que** le couvercle (14 ; 108) est réalisé par rapport à la fermeture (32 ; 109) sans parties mobiles, est de manière préférée d'un seul tenant.

15. Rotor de centrifugeuse (10 ; 100) selon l'une quelconque des revendications précédentes, **caractérisé en ce qu'**un étanchéification (28, 30) de manière préférée étanche aux aérosols entre le couvercle (14 ; 108) et la partie inférieure (12 ; 106) existe de sorte que la fermeture (32 ; 109) est disposée par rapport à l'étanchéification (28, 30) à l'extérieur d'un espace à échantillons (26) formé entre le couvercle (14 ; 108) et la partie inférieure (12 ; 106).
